# EUROPEAN PATENT SPECIFICATION

(11) **EP 4 545 836 B1**
(45) Date of publication and mention of the grant of the patent: **03.12.2025**
(21) Application number: 24207692.5
(22) Date of filing: 21.10.2024
(51) Int. Cl.: F16L 39/00, B60H 1/00, F16L 41/08, F16L 41/14

(54) **PIPE CONNECTING SYSTEM**
ROHRVERBINDUNGSSYSTEM
SYSTÈME DE RACCORDEMENT DE TUYAUX

(30) Priority: 26.10.2023 IT 202300022440
(43) Date of publication of application: 30.04.2025
(73) Proprietor: DENSO THERMAL SYSTEMS S.p.A., 10046 Poirino (Torino) (IT)
(72) Inventor: ALOCCO, Alessandro Maria, 10046 Poirino (Torino) (IT); LARACCA, Davide, 10046 Poirino (Torino) (IT); BORRELLI, Antonio, 10046 Poirino (Torino) (IT)
(74) Representative: Vanzini, Christian

(56) References cited:
- EP-A2- 1 052 443
- DE-A1- 10 133 940
- US-A- 5 556 138

## Description

The present invention relates to a pipe connecting system, particularly for the air conditioning systems in motor vehicles.

Prior art pipe connecting systems are known from EP 1 052 443 A2, disclosing a leakage restriction device for a refrigeration cycle with leakage restriction gaskets in a pipe connection of the cycle restricting the flow of refrigerant leaking to atmosphere to reduce leakage to atmosphere.

Specifically, the present invention relates to a pipe connecting system comprising
a first pipe and a second pipe, each comprising a flaring end;
a connection block having a first side designed to receive the first pipe and the second pipe, and a second side opposite the first side, and designed to receive a first tubular terminal and a second tubular terminal, wherein the connection block (10) is a one-piece body made of plastic material, first through-hole and a second through-hole are formed for housing the first pipe and the second pipe, respectively, the said first through-hole and second through-hole extending between the first side and the second side of the connection block;
wherein the first pipe and the second pipe each comprise a flanged portion positioned near the respective flaring end;
wherein the pipe connecting system also comprises a locking plate of metal material, which comprises an engagement portion configured to simultaneously engage the flanged portions of the first pipe and the second pipe, the locking plate being attachable to the connection block by at least one screw to hold the first pipe and the second pipe between the connection block and the locking plate.

At the second side of the connection block, at least one threaded insert may be inserted for securing, via a respective screw, the first tubular terminal and the second tubular terminal to the connection block.

The first tubular terminal and the second tubular terminal are specifically inserted into respective enlarged internal diameter portions of the first pipe and the second pipe respectively. The first tubular terminal and the second tubular terminal can be provided with at least one support portion extending laterally and bearing a through-hole suitable for receiving a respective screw for coupling to said at least one threaded insert.

The method according to the invention allows the direct connection of pipes, without requiring a third element to achieve fluidic continuity, and provides retention of the pipes that allows supporting and securing the first and second pipe (which, in this case, may be pipes on heat exchanger side) relative to the vehicle, as well as the connection to the first tubular terminal and the second tubular terminal (which, in this case, may be terminals on the vehicle system side). This is essentially achieved by a plastic connection block and a locking plate coupled to the connection block.

Further features and advantages of the pipe connecting system according to the invention will become clearer in the following detailed description of an embodiment of the invention, by making reference to the accompanying drawings, provided for purely illustrative and nonlimiting purposes, wherein
figure 1 is a perspective view of a pipe connecting system according to the invention;
figure 2 is a sectional view of the pipe connecting system; and
figure 3 is an exploded view of the pipe connecting system.

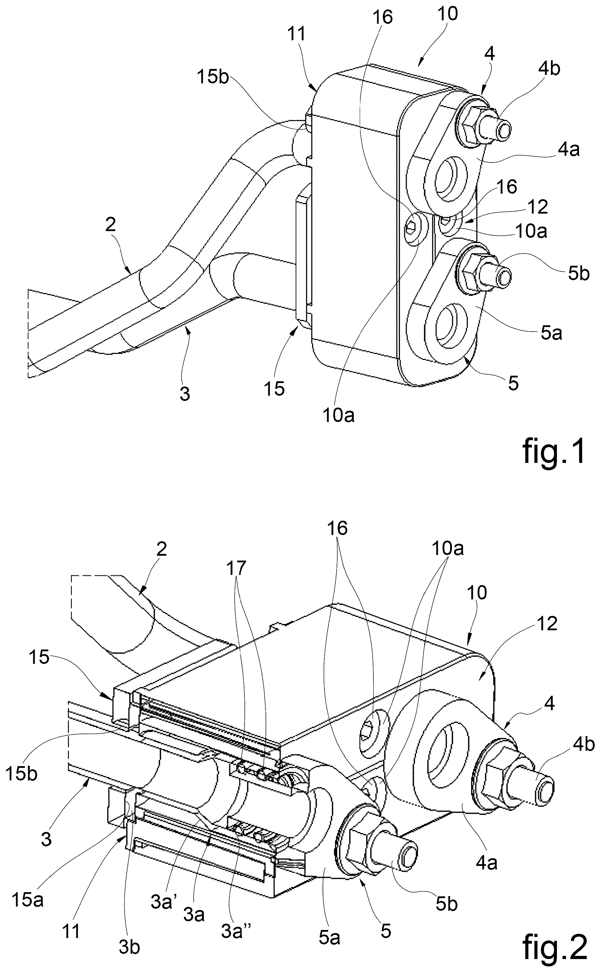

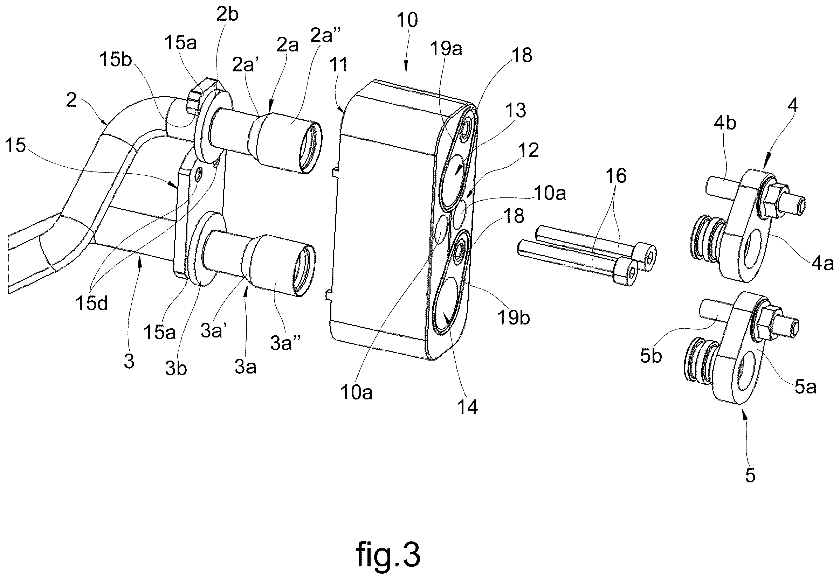

Figures 1-3 show a pipe connecting system, which may be provided for connecting a heat exchanger of an air conditioning unit, for example an evaporator (not shown), to a circuit installed in a motor vehicle (not shown) for the circulation of a refrigerant. To this end, the heat exchanger can be connected to a pair of pipes 2 and 3 of metal material (for example, one for the inlet to the heat exchanger and one for the outlet from the heat exchanger).

More specifically, the pipes 2 and 3, which will be hereinafter referred to as the first pipe and the second pipe, are connected to a connection block 10. In the figures, a first tubular terminal and a second tubular terminal of metal material are also shown, respectively denoted by 4 and 5, which are also connected to the connection block 10 and belong to the refrigerant circuit to which the heat exchanger is connected. In the connection block 10, a first side 11 intended to receive the first pipe and the second pipe 2, 3, and a second side 12 opposite the first side 11 and intended to receive the first tubular terminal and the second tubular terminal 4, 5, can be identified.

The first pipe and the second pipe 2, 3 each comprise a flaring end 2a, 3a. Each flaring end 2a, 3a comprises a flare 2a', 3a' and, at a distal position relative to the flare 2a', 3a', there is an enlarged diameter portion 2a", 3a". Each enlarged diameter portion 2a", 3a" has a larger diameter than the remaining part of the respective pipe and is connected to said remaining part by the respective flare 2a', 3a'. In this description, the terms "distal" and "proximal" mean "farther" and "closer," respectively to the item to which the first pipe and the second pipe are associated, which in the illustrated example consists of a heat exchanger.

Furthermore, the first pipe and the second pipe 2, 3 each comprise a flanged portion 2b, 3b extending radially outward and positioned near the respective flaring end 2a, 3a, proximally to it. The flared portion and the flanged portion are formed on the pipes using conventional pipe manufacturing techniques.

The connection block 10 is a one-piece body made of plastic material, through which a first through-hole 13 and a second through-hole 14 are formed. These through-holes 13, 14 are configured to house the flaring ends 2a, 3a of the first and second pipes 2, 3, respectively. More precisely, when the first pipe and the second pipe 2, 3 are inserted into the connection block 10, the through-holes 13, 14 house not only the respective flaring ends 2a, 3a of the pipes 2, 3 but also a section of the pipe located between the flaring ends 2a, 3a and the respective flanged portions 2b, 3b. Additionally, the enlarged diameter portions 2a", 3a" of the pipes 2, 3 are in contact with the lateral surface of the respective through-holes 13, 14 of the connection block 10.

The pipe connecting system further comprises a locking plate 15 of metal material, which includes an engagement portion 15a configured to engage simultaneously the flanged portions 2b, 3b of the first pipe and the second pipe 2, 3. The locking plate 15 has a pair of loops (only one of which is visible in the figures, denoted by 15b) with transverse dimensions slightly larger than the outer diameter of the first pipe 2 and the second pipe 3, but smaller than the outer diameter of the flanged portions 2b and 3b, respectively. This allows the locking plate 15 to be assembled to the pipes 2 and 3 and moved along the pipes until it engages with the flanged portions 2b and 3b. In practice, the engagement portion 15a provided by the locking plate 15 is formed by portions of the surface of the plate facing the connection block, which are arranged around the edges of the loops 15b, 15c.

The locking plate 15 is secured to the connection block 10 by at least one screw 16 (in the example, two screws) to hold the first pipe and the second pipe 2, 3 between the connection block 10 and the locking plate 15. To this end, through-holes 10a are formed in the connection block 10 to allow the placement of screws 16, while threaded through-holes 15d are formed in the locking plate, into which the threads of screws 16 engage. In this way, the screws 16 act as tie rods, applying a clamping force acting on one end of the screws at the locking plate 15, and on the other end of the screws at the second side 12 of the connection block 10. The screws 16 thus enable the clamping of the locking plate 15 against the flanged portions 2b, 3b of the pipes 2, 3, thereby clamping those flanged portions against the connection block 10. It should be noted that no other screws are required for the integrity of the pipe connecting system besides those used to secure the locking plate 15 to the connection block 10.

Referring to figure 2, the first tubular terminal 4 and the second tubular terminal 5 are inserted into the respective enlarged diameter portions 2a" and 3a" of the first pipe 2 and the second pipe 3, respectively. Between the radially outer surface of each of first tubular terminal and second tubular terminal 4, 5 and the radially inner surface of respective enlarged diameter portions 2a" and 3a", respective gaskets 17 are interposed.

The first tubular terminal 4 and the second tubular terminal 5 are provided with at least one support portion 4a, 5a (in the example, one support portion each), extending laterally and having a through-hole suitable for receiving a respective screw 4b, 5b for the coupling to the connection block 10. More specifically, threaded inserts 18 are inserted at the second side 12 of the connection block 10 for securing the first tubular terminal 4 and the second tubular terminal 5 to the connection block 10 via screws 4b, 5b. These threaded inserts 18 may be inserted into the connection block 10 during the moulding process of the connection block 10 or may be implanted into the connection block 10 in a subsequent stage after its moulding.

At the second side 12 of the connection block 10, a first gasket 19a and a second gasket 19b are also arranged, respectively around the first through-hole 13 and the second through-hole 14. These gaskets are configured to be interposed between the second side 12 of the connection block 10 and the respective support portions 4a, 5a of the first tubular terminal 4 and the second tubular terminal 5. The gaskets 19a, 19b can be formed on the connection block 10 using a multi-material moulding technique.

## Claims

1. Pipe connecting system comprising:
a first pipe (2) and a second pipe (3), both comprising a flaring end (2a, 3a);
a connection block (10) having a first side (11) intended to receive the first pipe (2) and the second pipe (3), and a second side (12) oppo-site to the first side (11) and intended to receive a first tubular terminal (4) and a second tubular terminal (5), wherein the connection block (10) is a one-piece body of plastic material, through which a first through-hole (13) and a second through-hole (14) are formed for housing the first pipe (2) and the second pipe (3), respectively, said first through-hole and second through-hole (13, 14) extending between the first side (11) and the second side (12) of the connecting block (10);
wherein the first pipe (2) and the second pipe (3) both comprise a flanged portion (2b, 3b) arranged close to the respective flaring end (2a, 3a);
the pipe connecting system further comprising a locking plate (15) of metal material, which comprises an engagement portion (15a) configured to simultaneously engage the flanged portions (2b, 3b) of the first pipe (2) and second pipe (3), the locking plate (15) being attachable to the connection block (10) by at least one screw (16) to hold the first pipe (2) and the second pipe (3) between the connection block (10) and the locking plate (15).

2. Connecting system according to claim 1, wherein at least one threaded insert (18) is inserted at the second side (12) of the connection block (10) for securing said first tubular terminal and said second tubular terminal to the connection block (10) by a respective screw (4b, 5b).

3. Connecting system according to any of the preceding claims, further comprising the first tubular terminal (4) and the second tubular terminal (5), which are inserted into respective enlarged diameter portions (2a", 3a") of the first pipe (2) and second pipe (3), respectively.

4. Connecting system according to claims 2 and 3, wherein the first tubular terminal (4) and the second tubular terminal (5) are provided with at least one support portion (4a, 5a) extending laterally and bearing a through-hole suitable for receiving a respective screw (4b, 5b) for coupling to said at least one threaded insert (18).

5. Connecting system according to any of the preceding claims, wherein a first gasket (19a) and a second gasket (19b) are arranged at the second side (12) of the connection block (10), around the first through-hole (13) and the second through-hole (14), respectively.

6. Connecting system according to claims 4 and 5, wherein said first gasket and said second gasket (19a, 19b) are interposed between the second side (12) of the connection block (10) and said at least one support portion (4a, 5a) of the first tubular terminal (4) and second tubular terminal (5).

## Patentansprüche

1. Rohrverbindungssystem umfassend:
ein erstes Rohr (2) und ein zweites Rohr (3), die jeweils ein ausgeweitetes Ende (2a, 3a) umfassen;
einen Verbindungsblock (10) aufweisend eine erste Seite (11), die dazu bestimmt ist, das erste Rohr (2) und das zweite Rohr (3) aufzunehmen, und eine zweite Seite (12), die der ersten Seite (11) gegenüberliegt und dazu bestimmt ist, ein erstes rohrförmiges Endstück (4) und ein zweites rohrförmiges Endstück (5) aufzunehmen, wobei der Verbindungsblock (10) ein einstückiger Körper aus Kunststoffmaterial ist, durch den eine erste Durchgangsbohrung (13) und eine zweite Durchgangsbohrung (14) ausgebildet sind, um das erste Rohr (2) und das zweite Rohr (3) aufzunehmen, wobei sich die erste Durchgangsbohrung und die zweite Durchgangsbohrung (13, 14) zwischen der ersten Seite (11) und der zweiten Seite (12) des Verbindungsblocks (10) erstrecken;
wobei das erste Rohr (2) und das zweite Rohr (3) jeweils einen Flanschabschnitt (2b, 3b) umfassen, der in der Nähe des jeweiligen ausgeweiteten Endes (2a, 3a) angeordnet ist;
das Rohrverbindungssystem ferner umfassend eine Verriegelungsplatte (15) aus Metallmaterial, die einen Eingriffsabschnitt (15a) umfasst, der dazu konfiguriert ist, gleichzeitig mit den Flanschabschnitten (2b, 3b) des ersten Rohrs (2) und des zweiten Rohrs (3) in Eingriff zu kommen, wobei die Verriegelungsplatte (15) mit dem Verbindungsblock (10) durch mindestens eine Schraube (16) befestigt werden kann, um das erste Rohr (2) und das zweite Rohr (3) zwischen dem Verbindungsblock (10) und der Verriegelungsplatte (15) zu halten.

2. Rohrverbindungssystem nach Anspruch 1,
wobei mindestens ein Gewindeeinsatz (18) an der zweiten Seite (12) des Verbindungsblocks (10) eingeführt wird, um das erste rohrförmige Endstück und das zweite rohrförmige Endstück durch eine jeweilige Schraube (4b, 5b) an dem Verbindungsblock (10) zu befestigen.

3. Rohrverbindungssystem nach einem der vorhergehenden Ansprüche, ferner umfassend das erste rohrförmige Endstück (4) und das zweite rohrförmige Endstück (5), die jeweils in jeweilige erweiterte Durchmesserabschnitte (2a", 3a") des ersten Rohrs (2) sowie des zweiten Rohrs (3) eingeführt sind.

4. Rohrverbindungssystem nach den Ansprüchen 2 und 3, wobei das erste rohrförmige Endstück (4) und das zweite rohrförmige Endstück (5) mit mindestens einem Stützabschnitt (4a, 5a) versehen sind, der sich seitlich erstreckt und der eine Durchgangsbohrung trägt, die geeignet ist, eine jeweilige Schraube (4b, 5b) zum Koppeln mit dem mindestens einen Gewindeeinsatz (18) aufzunehmen.

5. Rohrverbindungssystem nach einem der vorhergehenden Ansprüche, wobei eine erste Dichtung (19a) und eine zweite Dichtung (19b) an der zweiten Seite (12) des Verbindungsblocks (10) jeweils um die erste Durchgangsbohrung (13) und die zweite Durchgangsbohrung (14) angeordnet sind.

6. Rohrverbindungssystem nach den Ansprüchen 4 und 5, wobei die erste Dichtung und die zweite Dichtung (19a, 19b) zwischen der zweiten Seite (12) des Verbindungsblocks (10) und dem mindestens einen Stützabschnitt (4a, 5a) des ersten rohrförmigen Endstücks (4) und des zweiten rohrförmigen Endstücks (5) angeordnet sind.

## Revendications

1. Système de raccordement de tuyaux comprenant :
un premier tuyau (2) et un second tuyau (3), comprenant chacun une extrémité évasée (2a, 3a) ;
un bloc de connexion (10) ayant un premier côté (11) destiné à recevoir le premier tuyau (2) et le second tuyau (3), et un second côté (12) opposé au premier côté (11) et destiné à recevoir un premier terminal tubulaire (4) et un second terminal tubulaire (5), ledit bloc de connexion (10) étant un corps monobloc en matière plastique, à travers lequel sont formés un premier trou traversant (13) et un second trou traversant (14) pour loger respectivement le premier tuyau (2) et le second tuyau (3), lesdits premier et second trous traversants (13, 14) s'étendant entre le premier côté (11) et le second côté (12) du bloc de connexion (10) ;
dans lequel le premier tuyau (2) et le second tuyau (3) comprennent chacun une portion à collerette (2b, 3b) disposée à proximité de l'extrémité évasée correspondante (2a, 3a) ;
le système de raccordement de tuyaux comprenant en outre une plaque de verrouillage (15) en matériau métallique, laquelle comprend une portion d'accouplement (15a) configurée pour s'accoupler simultanément auxdites portions à collerette (2b, 3b) du premier tuyau (2) et du second tuyau (3), la plaque de verrouillage (15) pouvant être fixée au bloc de connexion (10) par au moins une vis (16) pour maintenir le premier tuyau (2) et le second tuyau (3) entre le bloc de connexion (10) et la plaque de verrouillage (15).

2. Système de raccordement selon la revendication 1, dans lequel au moins un insert fileté (18) est inséré au niveau du second côté (12) du bloc de connexion (10) pour fixer ledit premier terminal tubulaire et ledit second terminal tubulaire au bloc de connexion (10) par une vis respective (4b, 5b).

3. Système de raccordement selon l'une quelconque des revendications précédentes, comprenant en outre le premier terminal tubulaire (4) et le second terminal tubulaire (5), qui sont insérés dans des portions respectives de diamètre élargi (2a", 3a") du premier tuyau (2) et du second tuyau (3), respectivement.

4. Système de raccordement selon les revendications 2 et 3, dans lequel le premier terminal tubulaire (4) et le second terminal tubulaire (5) sont pourvus d'au moins une portion de support (4a, 5a) s'étendant latéralement et comportant un trou traversant apte à recevoir une vis respective (4b, 5b) pour l'accouplement audit au moins un insert fileté (18).

5. Système de raccordement selon l'une quelconque des revendications précédentes, dans lequel un premier joint (19a) et un second joint (19b) sont disposés au niveau du second côté (12) du bloc de connexion (10), autour du premier trou traversant (13) et du second trou traversant (14), respectivement.

6. Système de raccordement selon les revendications 4 et 5, dans lequel ledit premier joint et ledit second joint (19a, 19b) sont interposés entre le second côté (12) du bloc de connexion (10) et ladite au moins une portion de support (4a, 5a) du premier terminal tubulaire (4) et du second terminal tubulaire (5).
